# FASCICULE DE BREVET EUROPEEN

(11) **EP 3 809 796 B1**
(45) Date de publication et mention de la délivrance du brevet: **13.04.2022**
(21) Numéro de dépôt: 20202377.6
(22) Date de dépôt: 16.10.2020
(51) Int. Cl.: H04W 84/12, H04W 52/02, H04W 88/06, H04W 84/20

(54) **PROCÉDÉ DE MISE EN VEILLE ET PROCÉDÉ DE RÉACTIVATION D'AU MOINS UNE PARTIE D'UN RÉSEAU DE COMMUNICATION SANS FIL ET NOEUD DE COLLECTE DUDIT RÉSEAU**
STANDBY- UND REAKTIVIERUNGSVERFAHREN FÜR ZUMINDEST TEILE EINES DRAHTLOSEN KOMMUNIKATIONSNETZES UND EINES SAMMELKNOTENS DES NETZES
STANDBY AND REACTIVATION METHODS OF AT LEAST PART OF A WIRELESS COMMUNICATIONS NETWORK AND NETWORK COLLECTION NODE

(30) Priorité: 18.10.2019 FR 1911655
(43) Date de publication de la demande: 21.04.2021
(73) Titulaire: SAGEMCOM BROADBAND SAS, 92500 Rueil-Malmaison (FR)
(72) Inventeur: GRAUL, Alexis, 92500 Rueil Malmaison (FR); RABY, Florent, 92500 Rueil Malmaison (FR); ZAOUIA, Farid, 92500 Rueil Malmaison (FR)
(74) Mandataire: Cabinet Le Guen Maillet

(56) Documents cités:
- US-A1- 2013 078 912
- US-A1- 2015 208 348
- US-A1- 2017 367 040

## Description

### DOMAINE TECHNIQUE

Au moins un mode de réalisation concerne le domaine des réseaux de communication sans fil conformes à l'une des normes IEEE 802.11 (« Institute of Electrical and Electronics Engineers » en anglais), c'est-à-dire celui des réseaux de communication sans fil communément appelés réseaux « Wi-Fi ». Au moins un mode de réalisation concerne plus particulièrement un procédé de mise en veille et un procédé de réactivation d'au moins une partie d'un tel réseau.

### ETAT DE LA TECHNIQUE ANTERIEURE

Un réseau de communication sans fil (ci-après « réseau ») conforme à l'une des normes IEEE 802.11 comprend typiquement une pluralité de nœuds. Chaque noeud est un dispositif électronique comprenant *a minima* un module radiofréquence permettant l'établissement de communications conformément à l'une des normes IEEE 802.11, ou dit autrement, conformément à l'une des normes Wi-Fi. Un tel réseau comprend typiquement un dispositif électronique, communément appelé point d'accès (« Access Point » en anglais, ou « AP ») et une pluralité de dispositifs électroniques dits utilisateurs (ou clients) pouvant établir des connexions sans fil avec le point d'accès et/ou entre elles. Dans un environnement résidentiel, le dispositif électronique, point d'accès, est typiquement une « box » fournie par un opérateur Internet, c'est-à-dire une passerelle domestique (« home gateway », ou « residential gateway », en anglais). Les dispositifs électroniques utilisateurs sont typiquement des ordinateurs, télévisions, tablettes ou téléphones dits « intelligents » (« smartphone » en anglais). On dit ainsi communément que les dispositifs électroniques utilisateurs sont associés « en Wi-Fi » avec le point d'accès.

L'architecture d'un réseau Wi-Fi peut aussi être distribuée, afin par exemple d'étendre la portée du réseau ou d'augmenter ses performances, par l'utilisation d'une pluralité de points d'accès. L'architecture d'un réseau Wi-Fi distribuée est différente de la précédente architecture succinctement décrite. Un réseau Wi-Fi distribué comprend au minimum deux réseaux :
- un réseau dit de collecte ou d'infrastructure (« backhaul » en anglais), permettant de relier les points d'accès entre eux et de constituer une infrastructure réseau suivant une architecture réseau de type mixte étoile et/ou chaîne, ce réseau de collecte peut être un réseau sans-fil (par exemple Wi-Fi), filaire (par exemple Ethernet) ou un mélange des deux,
- un réseau Wi-Fi dit utilisateur (ou client) (« fronthaul » en anglais), permettant une connexion de noeuds (ou dispositifs électroniques) dits utilisateurs (ou clients) au réseau Wi-Fi distribué.

Dans le réseau d'infrastructure, une hiérarchie parent-enfant est créée entre deux dispositifs Wi-Fi reliés. L'un des dispositifs Wi-Fi devient parent de l'autre dispositif Wi-Fi, l'autre dispositif Wi-Fi devenant enfant du dispositif Wi-Fi parent. Le dispositif Wi-Fi parent joue un rôle de point d'accès pour le dispositif Wi-Fi enfant. Le dispositif Wi-Fi enfant joue un rôle de station pour le dispositif Wi-Fi parent.

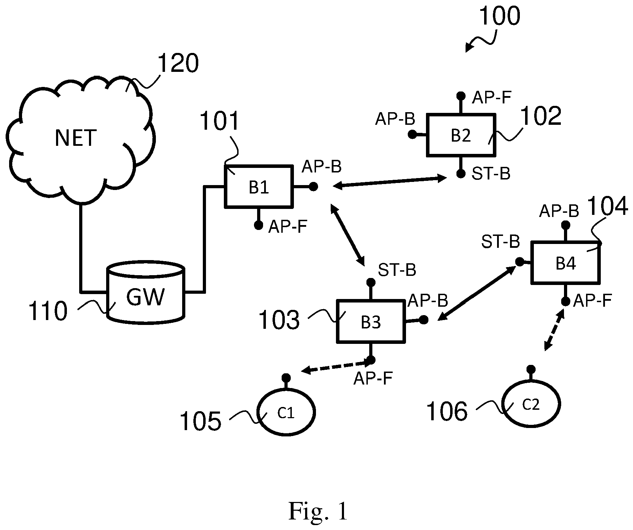

La **Fig. 1** illustre de façon très schématique un tel réseau Wi-Fi distribué 100. Le réseau distribué 100 comprend une passerelle 110 (ou « gateway » en anglais) et une pluralité de noeuds ou dispositifs électroniques B1 101, B2 102, B3 103, B4 104, C1 105 et C2 106. La passerelle 110 permet une interconnexion du réseau 100 avec un réseau 120, par exemple le réseau Internet. Dans cet exemple, les noeuds B1, B2, B3 et B4 sont des nœuds dits de collecte. Ces noeuds B1, B2, B3 et B4 constituent l'infrastructure de collecte (« backhaul ») du réseau 100. Les noeuds C1 et C2 sont deux noeuds utilisateurs connectés à des noeuds de collecte (respectivement les noeuds B3 et B4). Les noeuds de collecte B1, B2, B3 et B4 gèrent deux réseaux Wi-Fi :
- un premier réseau Wi-Fi, dédié à la collecte, permet une association de chaque noeud de collecte au réseau distribué 100, possiblement de façon maillée,
- un deuxième réseau Wi-Fi est dédié à l'association des noeuds utilisateurs, de façon similaire à un réseau Wi-Fi non distribué.

Ainsi, chaque nœud B1, B2, B3 et B4 de l'infrastructure comprend une pluralité d'interfaces radio :
- une interface radio dite « AP-B » (pour « Access Point Backhaul » en anglais) correspondant à une interface point d'accès du réseau Wi-Fi dédié à la collecte,
- une interface radio « ST-B » (pour « Station Backhaul » en anglais) correspondant à une interface utilisateur (ou client) du réseau Wi-Fi dédié à la collecte,
- une interface radio « AP-F » (pour « Access Point Fronthaul » en anglais) correspondant à une interface point d'accès du réseau Wi-Fi dédié à l'association de noeuds utilisateurs du réseau distribué 100.

Dans l'exemple illustré dans la Fig. 1, le nœud B1 101 est connecté de façon filaire à la passerelle GW 110, par exemple via une connexion Ethernet. Selon un mode de réalisation, la connexion entre la passerelle GW 110 et le noeud B1 101 peut être réalisée par une connexion Wi-Fi. Selon un mode de réalisation complémentaire, la passerelle GW 110 et le noeud B1 101 sont un seul et même dispositif électronique, ledit dispositif électronique comprenant les fonctionnalités de la passerelle GW 110 et du nœud B1 101.

Chaque nœud de collecte B1, B2, B3 ou B4 peut donc possiblement établir une connexion vers un autre nœud de collecte afin de constituer l'infrastructure de collecte du réseau distribué 100. Plus précisément, un noeud de collecte peut, via son interface radio « ST-B » établir une connexion vers une interface radio « AP-B » d'un autre noeud de collecte afin de constituer une chaîne de nœud de collecte. Certains nœuds de collecte peuvent être connectés via une liaison filaire, par exemple de type Ethernet. Une interface radio AP-B, point d'accès du réseau Wi-Fi dédié à la collecte, établit un réseau Wi-Fi associé à un identifiant réseau SSID (« Service set identifier » en anglais) correspondant au réseau de collecte. Un noeud de collecte doit donc connaître ce SSID pour établir une connexion Wi-Fi vers un autre nœud de collecte.

Un nœud de collecte est adapté pour retransmettre le trafic (c'est-à-dire des données, échangées dans des messages) reçu via ses interfaces radios « point d'accès » utilisateurs « AP-F » et de collecte « AP-B » vers son interface radio « utilisateur » de collecte « ST-B » afin de remonter le trafic reçu vers un nœud central du réseau distribué, ici le noeud B1 101. De même, un noeud de collecte est adapté pour redistribuer le trafic reçu via son interface radio « utilisateur » de collecte « ST-B » vers l'une et/ou l'autre de ses interfaces radios « point d'accès » utilisateurs et de collecte utilisateurs « AP-F » et/ou « AP-B ». Dit autrement, dans l'exemple illustré dans la Fig. 1, le nœud de collecte B3 103 est adapté pour :
- recevoir du trafic collecté par le nœud B4 104 via son interface radio AP-B,
- recevoir du trafic de noeuds utilisateurs connectés, par exemple le nœud utilisateur C1 105, via son interface AP-F,
- retransmettre lesdits trafics reçus vers le nœud de collecte B1 101 via son interface radio utilisateur de collecte ST-B, et,
- inversement, rediriger du trafic reçu via son interface radio utilisateur de collecte ST-B vers le nœud B4 104 via son interface AP-B et/ou le nœud de collecte B1 101 via son interface radio utilisateur de collecte ST-B.

Les noeuds du réseau de collecte communiquent ainsi entre eux grâce à des liaisons logiques, par exemple des communications IP ou des tunnels chiffrés ou des communications selon un protocole de communication propriétaire.

Un tel réseau diffuse de nombreux signaux électromagnétiques et est également très consommateur d'énergie. Dès lors, il est connu de mettre en veille tout ou partie du réseau. Il est également connu de pouvoir réactiver le réseau ou la partie de réseau mis en veille.

Ainsi, la demande de brevet US20100195551 décrit un procédé de mise en veille d'un réseau de communication sans fil maillé (« Mesh » en anglais) dans lequel un nœud maître émet directement, ou au travers de relais, à des nœuds esclaves un ordre de mise en veille (ou endormissement). Ce procédé est associé à la mise en œuvre dans chaque nœud esclave d'une fonction intermittente de réception permettant de recevoir un ordre de réactivation (ou réveil) provenant directement ou indirectement du nœud maître. <5a>

Le document US 2017/0367040 décrit un procédé de transmission dans lequel un dispositif maître informe un dispositif esclave de son passage dans un mode veille afin que ce dernier arrête de lui transmettre des trames.

Le document US2013/0078912 décrit un procédé de transmission de données en provenance d'un capteur tel qu'un capteur de glucose.

Toutefois, les procédés décrits ne sont pas compatibles avec le protocole CSMA-CA utilisé par les normes 802.11. En effet, ce protocole ne permet pas de connaître les instants réels d'émission des trames. Par ailleurs, les procédés décrits ne permettent pas une mise en veille ou une réactivation du réseau à partir de n'importe quel nœud du réseau. Il est donc nécessaire de proposer des procédés permettant de pallier ces inconvénients.

### EXPOSE DE L'INVENTION

Selon un mode de réalisation particulier, un procédé de réactivation d'une partie d'un réseau de communication sans fil conforme à l'une des normes IEEE 802.11 est décrit. Ce procédé comprend une pluralité de nœuds de collecte organisés selon une hiérarchie parent/enfant, au moins un nœud de collecte dudit réseau de communication, dit noeud courant, comprenant une interface (AP-B) radiofréquence point d'accès et une interface (ST-B) radiofréquence utilisateur d'un réseau sans fil dit réseau de collecte associé au réseau de communication, lesdites interfaces radiofréquence point d'accès et utilisateur dudit réseau de collecte étant désactivées en émission. Le procédé est exécuté par ledit nœud courant et comprend :
- recevoir (S705) une première trame de balise émise par un autre nœud dudit réseau de communication, ladite première trame de balise comprenant une information d'état indiquant une réactivation en cours ;
   a) mettre en mémoire (S740) un état interne dudit nœud courant pour indiquer que ledit nœud est en cours de réactivation ;
   b) réactiver (S620, S750) pour ledit nœud courant l'ensemble de ses interfaces radiofréquence point d'accès et utilisateur du réseau de collecte;
   c) diffuser (S630, S760) une seconde trame de balise comprenant une information d'état indiquant une réactivation en cours de sorte à relayer l'information d'état indiquant qu'une réactivation est en cours; et
   d) s'appairer (S640, S770) à un nœud parent et dans le cas où ledit nœud courant possède des nœuds enfant, attendre que lesdits noeuds enfant s'appairent à lui, vérifier que l'état interne de chacun desdits nœuds enfants indique que ledit noeud enfant est réactivé et dans le cas où lesdits nœuds enfants sont réactivés mettre à jour l'état interne dudit nœud courant pour indiquer que ledit nœud courant est réactivé , et dans le cas où ledit nœud courant ne possède pas de noeud enfant, mettre à jour l'état interne dudit nœud courant pour indiquer que ledit nœud courant est réactivé.

Selon un mode de réalisation particulier, le nœud courant comprenant en outre une interface radiofréquence point d'accès d'un réseau sans fil dit réseau utilisateur associé au réseau de communication laquelle est désactivée en émission et en réception, le procédé comprend, après l'étape b), une étape de réactivation de ladite interface radiofréquence point d'accès dudit réseau utilisateur en émission et en réception.

Selon un mode de réalisation particulier, ladite première trame de balise comprend en outre une information d'horodatage correspondant à la date à laquelle ladite réactivation a été déclenchée, lesdites étapes a) à d) étant effectuées uniquement dans le cas où une valeur de ladite information d'horodatage reçue est supérieure à une valeur d'une information d'horodatage courante associée audit noeud courant.

Selon un mode de réalisation particulier, l'étape a) comprend en outre la mise en mémoire de l'information d'horodatage reçue à la place de la valeur de l'information d'horodatage courante.

Selon un mode de réalisation particulier, ladite seconde trame de balise comprend en outre l'information d'horodatage reçue.

Selon un mode de réalisation particulier, ladite première trame de balise comprenant en outre une clé d'identification dudit réseau, lesdites étapes a) à d) sont effectuées uniquement dans le cas où ladite clé d'identification dudit réseau de ladite trame de balise est identique à une clé d'identification stockée en mémoire dudit noeud courant. Selon un mode de réalisation particulier, ladite réactivation a été déclenchée par un appui sur un bouton dudit noeud maître.

Selon un mode de réalisation particulier, ledit réseau étant réactivé, le procédé comprend pour un nœud dudit réseau dit nœud receveur:
1) Recevoir un message d'un nœud du réseau, dit noeud demandeur, comprenant une demande de mise en veille ; et
   si ledit nœud receveur est un nœud n'ayant pas d'autre nœud adjacent que ledit nœud demandeur :
2) Envoyer un message audit nœud demandeur indiquant qu'il accepte la demande de mise en veille ;
3) Recevoir un message comprenant un ordre de mise en veille ;
4) Envoyer un message audit noeud demandeur acquittant l'ordre de mise en veille ;
5) Se mettre en veille en stockant en mémoire des informations de connexion et en désactivant en émission ses interfaces radiofréquence point d'accès et/ou utilisateur dudit réseau de collecte;
   sinon:
   - Envoyer un message audit nœud demandeur indiquant qu'il refuse la demande de mise en veille et une indication qu'il est nœud intermédiaire ;
   - Répéter les étapes 1) à 5) de manière récursive pour chacun des nœuds adjacents dudit nœud receveur distincts dudit nœud demandeur avec ledit nœud receveur agissant comme nouveau nœud demandeur, jusqu'à ce que l'ensemble des noeuds adjacents dudit nœud receveur soient mis en veille ;
   - Envoyer un message audit nœud demandeur comprenant une demande d'autorisation de mise en veille ;
   - Recevoir un message comprenant un ordre de mise en veille ;
   - Envoyer un message audit nœud demandeur en acquittant l'ordre de mise en veille ;
   - Se mettre en veille en en stockant en mémoire des informations de connexion et en désactivant en émission ses interfaces radiofréquence point d'accès et/ou utilisateur dudit réseau de collecte.

Selon un mode de réalisation particulier, se mettre en veille comprend en outre désactiver son interface radiofréquence point d'accès du réseau utilisateur en émission et en réception.

Selon un mode de réalisation particulier, le message comprenant la demande de mise en veille comprend une information indiquant qu'il s'agit d'une demande de mise en veille et un identifiant du nœud demandeur.

Selon un mode de réalisation particulier, le message comprenant la demande de mise en veille comprend en outre une clé d'identification propre audit réseau.

Selon un mode de réalisation particulier, le message comprenant l'ordre de mise en veille comprend une information indiquant qu'il s'agit d'un ordre de mise en veille et un identifiant du nœud envoyant le message.

Selon un mode de réalisation particulier, le message comprenant l'ordre de mise en veille comprend en outre une valeur temporelle définissant un instant auquel ledit nœud receveur doit se mettre en veille.

Selon un mode de réalisation particulier, le message comprenant l'ordre de mise en veille comprend en outre la clé d'identification propre audit réseau de ladite demande de mise en veille.

Selon un mode de réalisation particulier, le message comprenant l'ordre de mise en veille comprend en outre un identifiant d'un canal sur lequel les interfaces radio dudit nœud receveur doivent se réactiver.

Selon un mode de réalisation particulier, le message comprenant la demande d'autorisation de mise en veille comprend une information indiquant qu'il s'agit d'une demande d'autorisation de mise en veille et un identifiant du noeud envoyant ledit message.

Selon un mode de réalisation particulier, un noeud de collecte d'un réseau de communication sans fil conforme à l'une des normes IEEE 802.11 est décrit. Le noeud de collecte comprend une interface radiofréquence point d'accès et/ou utilisateur d'un réseau sans fil dit de collecte associé au réseau de communication lesquelles sont désactivées en émission. Le noeud de collecte est configuré pour exécuter les étapes du procédé décrit précédemment selon l'un quelconque des modes de réalisation.

Selon un mode de réalisation particulier, un programme d'ordinateur est décrit. Le programme d'ordinateur comprend des instructions pour mettre en œuvre, par un processeur d'un noeud de collecte d'un réseau de communication sans fil distribué comprenant une pluralité de noeuds de collecte, le procédé décrit précédemment selon l'un quelconque des modes de réalisation, lorsque le programme d'ordinateur est exécuté par le processeur.

Selon un mode de réalisation particulier, un support d'enregistrement est décrit. Le support d'enregistrement est lisible par un noeud de gestion d'un réseau de communication sans fil distribué, sur lequel est stocké le programme d'ordinateur décrit ci-dessus.

### BREVE DESCRIPTION DES DESSINS

Les caractéristiques mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] illustre schématiquement l'architecture d'un réseau de communication sans fil distribué comprenant une pluralité de nœuds, par exemple conforme à une norme IEEE 802.11;
[Fig. 2] illustre schématiquement un procédé de mise en veille d'un réseau de communication sans fil distribué conforme à l'une des normes IEEE 802.11 selon un mode de réalisation particulier;
[Fig. 3] représente un noeud demandeur A et des noeuds receveur B, C et D d'une demande de mise en veille;
[Fig. 4] illustre schématiquement un procédé de mise en veille d'un réseau de communication sans fil distribué conforme à l'une des normes IEEE 802.11 selon un autre mode de réalisation particulier;
[Fig. 5] représente un noeud demandeur A et des noeuds receveur B, C et D d'une demande de mise en veille, ledit noeud B étant un noeud intermédiaire;
[Fig. 6] illustre schématiquement un procédé de réactivation d'un réseau de communication sans fil distribué conforme à l'une des normes IEEE 802.11 selon un mode de réalisation particulier;
[Fig. 7] illustre schématiquement un procédé de réactivation d'un réseau de communication sans fil distribué conforme à l'une des normes IEEE 802.11 selon un autre mode de réalisation particulier; et,
[Fig. 8] illustre schématiquement l'architecture matérielle d'un noeud de collecte d'un réseau de communication sans fil distribué, le noeud de collecte étant adapté pour exécuter tout ou partie des étapes des procédés illustrés dans la Fig. 2, la Fig.4, la Fig. 6 ou dans la Fig. 7.

### EXPOSE DETAILLE DE MODES DE REALISATION

Au moins un mode de réalisation permet de mettre en veille un réseau de communication sans fil distribué conforme à l'une des normes IEEE 802.11 ou une partie d'un tel réseau. Cette mise en veille pouvant être déclenchée, e.g. par un utilisateur, à partir de n'importe quel noeud du réseau.

Au moins un mode de réalisation permet de réactiver un réseau de communication sans fil distribué conforme à l'une des normes IEEE 802.11 (respectivement une partie d'un tel réseau) lequel a été préalablement mis en veille. Cette réactivation pouvant être déclenchée, e.g. par un utilisateur, à partir de n'importe quel nœud du réseau.

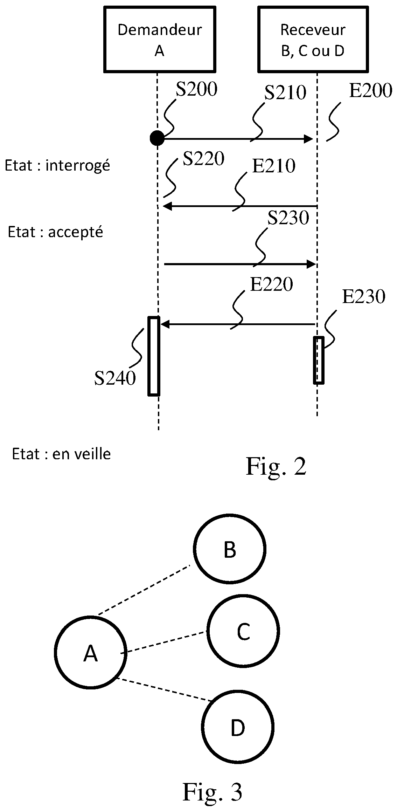

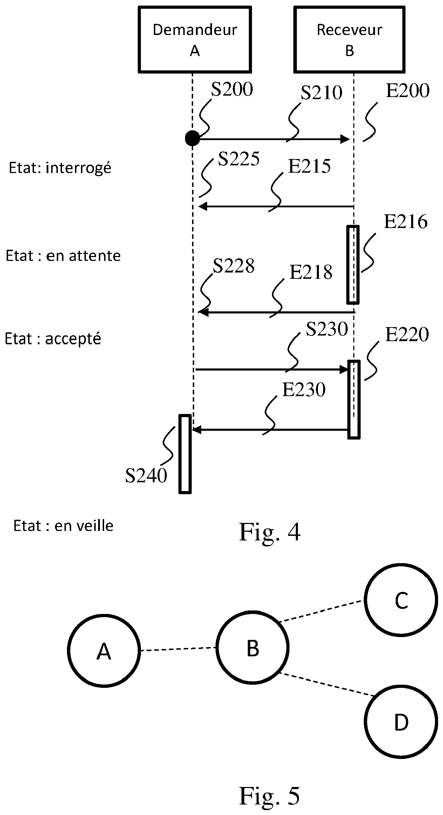

Les figures 2 et 4 illustrent schématiquement un procédé de mise en veille d'un réseau de communication sans fil distribué conforme à l'une des normes IEEE 802.11, par exemple le réseau 100, ou d'une partie de ce réseau. Dans la suite du document, un nœud est considéré comme étant « noeud demandeur » s'il effectue une demande de mise en veille auprès d'un autre nœud. Un noeud est considéré comme «nœud receveur» s'il reçoit une demande de mise en veille venant d'un noeud demandeur.

Sur les figures 2 et 4, les étapes mises en œuvre dans un nœud demandeur sont identifiées par la lettre S et les étapes mises en œuvre dans un noeud receveur sont identifiées par la lettre E.

La **Fig. 2** illustre plus particulièrement le procédé de mise en veille dans le cas où le noeud receveur de la demande de mise en veille est un nœud n'ayant pas d'autres nœuds adjacents que le nœud demandeur. Cela est le cas des noeuds B, C, ou D de la **Fig. 3**. Sur cette figure, le nœud A est le nœud demandeur. Le procédé est décrit avec le nœud A comme noeud demandeur et le nœud B comme noeud receveur. En cas de pluralité de noeuds adjacents, le procédé décrit est mis en œuvre avec chacun des noeuds adjacents du noeud demandeur, en l'occurrence les noeuds B, C et D sur la Fig. 3.

Au cours du procédé de mise en veille, le noeud demandeur A stocke en mémoire une information représentative de l'état du procédé de mise en veille relativement au noeud receveur parmi les états suivants :
- Prêt : état par défaut, le noeud est allumé et prêt à interagir dans le cas du procédé de mise en veille ;
- Interrogé : la demande de mise en veille a été envoyée, le noeud receveur a donc été interrogé et le nœud demandeur est en attente d'une réponse ;
- Accepté : la demande de mise en veille a été acceptée par le noeud receveur ;
- Refusé : la demande de mise en veille a été refusée par le noeud receveur ;
- En attente : le noeud receveur doit renvoyer une réponse au noeud demandeur ;
- Annulé : la procédure de mise en veille est annulée ; et
- En veille : le noeud receveur est en veille.

Lors d'une étape S200, le demandeur noeud A du réseau de communication sans fil détecte un déclenchement par un utilisateur d'une mise en veille du réseau. Le noeud demandeur A peut être n'importe quel noeud du réseau de communication sans fil. Le déclenchement de la mise en veille peut se faire par un utilisateur par appui sur un bouton physique du noeud demandeur A. Selon une variante, le déclenchement de la mise en veille est effectué par un utilisateur via une interface utilisateur rattachée au nœud demandeur. Le noeud demandeur va alors démarrer le procédé de mise en veille. Lors d'une étape S210, le noeud demandeur envoie en point à point (« unicast » en anglais) à destination d'un noeud adjacent B, considéré alors comme noeud receveur, un message M1 comprenant une demande de mise en veille. Il change également l'état du procédé de mise en veille relativement au noeud receveur en « interrogé ». Les noeuds adjacents sont les noeuds du réseau de collecte adjacents au noeud demandeur, i.e. accessibles depuis le nœud demandeur en un seul saut. Le message est par exemple transmis à l'aide d'un bus de communication au travers d'un lien filaire ou bien d'un lien sans fil (e.g. Wi-Fi ou Bluetooth).

Le message M1 comprend :
- Une information permettant de définir la catégorie de message (ici une demande de mise en veille). Cette information peut être un identifiant numérique permettant de définir la catégorie du message parmi un ensemble de catégories de message;
- Un identifiant du nœud A envoyant le message (identifiant au sein de la topologie, e.g. son adresse MAC) ;
- optionnellement, une clé d'identification du réseau permettant d'identifier ce dernier. Cette clé est par exemple générée aléatoirement par le nœud ayant initié la mise en veille du réseau, i.e. le nœud à partir duquel la mise en veille a été déclenchée. Cela permet d'immuniser le réseau contre une réactivation pirate. Optionnellement la clé pourrait servir à crypter les messages échangés ; et
- optionnellement, une liste des identifiants des noeuds par lesquels la demande a transité. Cette liste permet de connaître la topologie du réseau depuis le nœud à l'origine de la demande initiale de mise en veille. En effet, la mise en veille se propage de façon récursive depuis un noeud à l'origine de la demande initiale jusqu'à des extrémités de branches.Lors d'une étape E200, le noeud receveur B reçoit le message M1 comprenant la demande de mise en veille du réseau. A la réception de la demande de mise en veille, le noeud receveur B peut accepter ou refuser la demande et le cas échéant indiquer la raison du refus. Sur la fig.2, le noeud receveur B accepte la demande de mise en veille.

Lors d'une étape E210, le noeud receveur B envoie donc un message M2 au noeud demandeur A identifié dans le message M1, ledit message indiquant que le noeud receveur accepte la demande de mise en veille. Le message M2 comprend :
- Une information permettant de définir la catégorie de message (ici réponse à une demande de mise en veille). Cette information peut être un identifiant numérique permettant de définir la catégorie du message parmi un ensemble de catégories de message;
- Un identifiant du noeud B envoyant le message (identifiant au sein de la topologie, e.g. son adresse MAC) ;
- Une réponse au message M1: acceptation de la demande de mise en veille ; et
- Optionnellement, une liste de ses noeuds adjacents. Cette information permet au noeud A d'avoir une vision des noeuds adjacents au noeud B. Cette information permet notamment de compléter la vision topologique du système et de donner au noeud A une prévision de propagation vers l'aval au travers de la connaissance des nœuds adjacents au noeud B.

Lors d'une étape S220, le noeud demandeur A reçoit la réponse, i.e. le message M2, envoyée par le noeud receveur B. En cas de pluralité de noeuds adjacents, des messages sont reçus de l'ensemble de ses noeuds adjacents. A la réception d'une réponse (message M2) et si la demande est acceptée, le noeud demandeur A va changer l'état du procédé associé au noeud receveur en « accepté » et envoyer un ordre de mise en veille.

La demande ayant été acceptée, le noeud demandeur A envoie, lors d'une étape S230, au noeud receveur B un message M3 comprenant un ordre de mise en veille.

Le message M3 comprend :
- Une information permettant de définir la catégorie de message (ici ordre de mise en veille). Cette information peut être un identifiant numérique permettant de définir la catégorie du message parmi un ensemble de catégories de message;
- Un identifiant du noeud envoyant le message (identifiant au sein de la topologie, adresse MAC) ;
- Optionnellement, une valeur temporelle pour définir l'instant où les noeuds doivent se mettre en veille. Si la valeur est nulle alors la mise en veille est immédiate. Si cette valeur n'est pas présente dans le message M3, elle est supposée avoir une valeur définie par défaut, e.g. une valeur nulle ;
- Optionnellement, une information identifiant un canal dit de « réactivation » qui sera utilisé par tous les noeuds pour y déceler une activité menant à une réactivation/réveil du système. Ce canal peut être le canal courant utilisé avant mise en veille ou bien être différent. Cependant si le canal courant est un canal DFS, le noeud initiant la demande de mise en veille doit en choisir un non-DFS. Il peut sélectionner le canal le moins occupé avant mise en veille ou prendre un canal par défaut ;
- Optionnellement, la clé d'identification du réseau définie dans le message M1 si elle est présente ; et
- Optionnellement, la liste des identifiants des noeuds par lesquels la demande a transité.

Lors d'une étape E220, le noeud receveur B reçoit le message M3 comprenant l'ordre de mise en veille et il envoie en retour un message d'acquittement de l'ordre de mise en veille.

Lors d'une étape E230, le noeud receveur B se met en veille.
Si la valeur temporelle définie dans le message M3 comprenant l'ordre de mise en veille est égale à zéro, le noeud se met en veille immédiatement. Sinon, il le fait de manière différée. Ainsi, si la valeur temporelle définie dans M3 est une durée, le noeud se met en veille après que la durée indiquée dans M3 soit écoulée. Lorsque le noeud receveur B se met en veille, il effectue les actions suivantes :
- Il sauvegarde les informations de connexion (BSSID, SSID, mot de passe) afin de pouvoir se reconnecter ultérieurement au réseau et conserver la même topologie qu'avant la mise en veille. Optionnellement, il sauvegarde la clé d'identification du réseau et une donnée permettant d'identifier le canal, e.g. un numéro de canal identifiant une bande de fréquences, utilisé avant la mise en veille. Cette dernière information pourra par exemple être utilisée lors d'arbitrages par un noeud gestionnaire, suite à une réactivation du système sur le canal de réactivation, afin de basculer l'ensemble des noeuds du réseau de collecte sur un canal plus approprié ; et
- Il désactive ses interfaces radio « AP-B » et « ST-B » uniquement en émission, ces dernières restant actives en réception. La désactivation des interfaces radio « AP-B » et « ST-B » permet une désactivation en émission et en réception des interfaces radio « AP-F ». En effet, dès lors que les interfaces radio « AP-B » et « ST-B » sont désactivées, plus aucune information n'est échangée au travers des interfaces radio « AP-F ». Dans une variante, les interfaces radio « AP-F » sont laissées actives. Cette variante permet de détecter une activité d'un terminal mobile, e.g. un téléphone qu'on rallume, et de déclencher une réactivation du système à partir de cette détection. Optionnellement, avant ou après la mise en veille, il configure également le canal en appliquant celui, i.e. le canal de « réactivation », qui est indiqué dans le message M3 comprenant l'ordre de mise en veille. Ainsi, le nœud receveur B se mettra à l'écoute sur ce canal de réactivation afin d'y détecter d'éventuelles ordres de réactivation. Lors d'une étape S240, le noeud demandeur reçoit le message d'acquittement. Cet acquittement permet au noeud demandeur, i.e. celui ayant envoyé l'ordre de mise en veille, de se mettre en veille à son tour. En cas de pluralité de noeuds adjacents, comme illustré sur la Fig. 3, le noeud demandeur se met en veille lorsqu'il a reçu les messages d'acquittement de l'ensemble des noeuds receveur B, C et D. De manière optionnelle, le noeud demandeur, s'il est capable d'opérer sur les mêmes fréquences que le noeud receveur B, analyse son environnement radio pour vérifier que le noeud receveur a bien arrêté de transmettre et s'est donc mis en veille. Le noeud demandeur A peut alors changer l'état du procédé associé au nœud receveur « en veille ».

La Fig. 4 illustre le procédé de mise en veille dans lequel le noeud receveur B de la demande de mise en veille est un noeud intermédiaire, i.e. un noeud qui ne se trouve pas en bout de chaîne et qui a donc lui-même des noeuds adjacents C et D autres que le noeud demandeur comme illustré sur la Fig. 5. Sur cette figure, A est le noeud demandeur. Le noeud A envoie une demande de mise en veille au noeud B. Dans ce cas-ci, le noeud B va refuser la demande de mise en veille car il est un nœud intermédiaire entre le noeud A et les noeuds C et D. Le noeud B va alors initier à son tour une demande de mise en veille à ses propres noeuds adjacents (C et D) en suivant le procédé décrit ci-dessus en référence à la Fig. 2.

Lors d'une étape S200, le noeud demandeur A du réseau de communication sans fil détecte un déclenchement d'une mise en veille du réseau, e.g. par un utilisateur. Le noeud demandeur A peut être n'importe quel noeud du réseau de communication sans fil. Le déclenchement de la mise en veille peut se faire par un utilisateur par appui sur un bouton physique du noeud demandeur. Selon une variante, le déclenchement de la mise en veille est effectué par un utilisateur via une interface utilisateur rattachée au noeud demandeur. Le nœud demandeur va alors démarrer le procédé de mise en veille. Lors d'une étape S210, le noeud demandeur envoie en point à point (« unicast » en anglais) à destination d'un noeud adjacent, en l'occurrence le noeud B sur la Fig. 5, un message M1 comprenant une demande de mise en veille. Il change également l'état du procédé de mise en veille relativement au noeud receveur B en « interrogé ». En cas de pluralité de noeuds adjacents, le message M1 est envoyé à l'ensemble de ses noeuds adjacents. Le message est par exemple transmis à l'aide d'un bus de communication au travers d'un lien filaire ou bien d'un lien sans fil (e.g. Wi-Fi ou Bluetooth).

Lors d'une étape E200, le noeud receveur B reçoit le message M1 comprenant la demande de mise en veille du réseau.

Lors d'une étape E215, le noeud receveur B envoie un message M2 au noeud demandeur A, ledit message M2 indiquant qu'il refuse la demande de mise en veille. Le message M2 comprend :
- Une information permettant de définir la catégorie de message (ici réponse à une demande de mise en veille). Cette information peut être un identifiant numérique permettant de définir la catégorie du message parmi un ensemble de catégories de message;
- Une réponse au message M1: refusé ;
- Une raison du refus : Nœud intermédiaire ; et
- Optionnellement, la liste de ses noeuds adjacents.

En effet, le nœud B étant un noeud intermédiaire doit d'abord s'assurer que tous ses noeuds adjacents sont en veille avant d'accepter une demande de mise en veille.

Lors d'une étape S225, le noeud demandeur A reçoit la réponse envoyée par le noeud receveur B. Si la demande est refusée, la raison du refus est analysée. Dans le cas où la raison est « noeud intermédiaire », le noeud demandeur va alors changer l'état du procédé relativement au noeud receveur en « en attente ».

Lors d'une étape E216, le noeud receveur intermédiaire déclenche le procédé de mise en veille pour ses noeuds adjacents hormis le nœud demandeur, en l'occurrence pour les noeuds C et D de la Fig. 5. Les étapes de la Fig. 4 sont donc mises en œuvre avec le noeud B comme noeud demandeur et le noeud C ou D comme noeud receveur. Dans ce cas, lors de l'étape S200, la détection du déclenchement de la mise en veille pour le noeud B n'est pas effectuée par un utilisateur mais par la réception du message M1 comprenant la demande de mise en veille provenant du noeud A. Les étapes du procédé de mise en veille sont donc appliquées de manière récursive.

Lors d'une étape E218, une fois que les nœuds C et D sont en veille, le noeud receveur intermédiaire B envoie au noeud demandeur A un message M4 comprenant une demande d'autorisation de mise en veille.

Le message M4 comprend :
- Une information permettant de définir la catégorie de message (ici une demande d'autorisation de mise en veille). Cette information peut être un identifiant numérique permettant de définir la catégorie du message parmi un ensemble de catégories de message; et
- Un identifiant du noeud B envoyant le message (identifiant au sein de la topologie, e.g. son adresse MAC).

Lors d'une étape S228, noeud demandeur A reçoit le message M4 comprenant la demande d'autorisation de mise en veille.

Lors d'une étape S230, le noeud demandeur envoie un message M3 comprenant un ordre de mise en veille. Il change l'état associé au noeud B en « accepté ».

Lors d'une étape E220, le noeud receveur reçoit le message M3 comprenant l'ordre de mise en veille et se met en veille.

Lors d'une étape E230, le nœud receveur B envoie un message d'acquittement de l'ordre de mise en veille.

Lors d'une étape S240, le noeud demandeur reçoit le message d'acquittement. Cet acquittement permet au noeud demandeur, i.e. celui ayant envoyé l'ordre de mise en veille, de se mettre en veille à son tour. En cas de pluralité de noeuds adjacents, comme illustré sur la Fig. 3, le noeud demandeur se met en veille lorsqu'il a reçu les messages d'acquittement de l'ensemble des noeuds receveur B, C et D. De manière optionnelle, le noeud demandeur, s'il est capable d'opérer sur les mêmes fréquences que le noeud receveur B, analyse son environnement radio pour vérifier que le noeud receveur a bien arrêté de transmettre et s'est donc mis en veille. Le noeud demandeur A peut alors changer l'état du procédé associé au nœud receveur en « en veille ». Bien entendu, si l'un des noeuds C ou D a lui-même des noeuds adjacents, le procédé décrit en lien avec la Fig. 4 est appliqué avec le noeud C ou D comme noeud demandeur et ses noeuds adjacents comme noeuds receveur. Ainsi, de proche en proche, l'ensemble du réseau de communication sans fil est mis en veille.

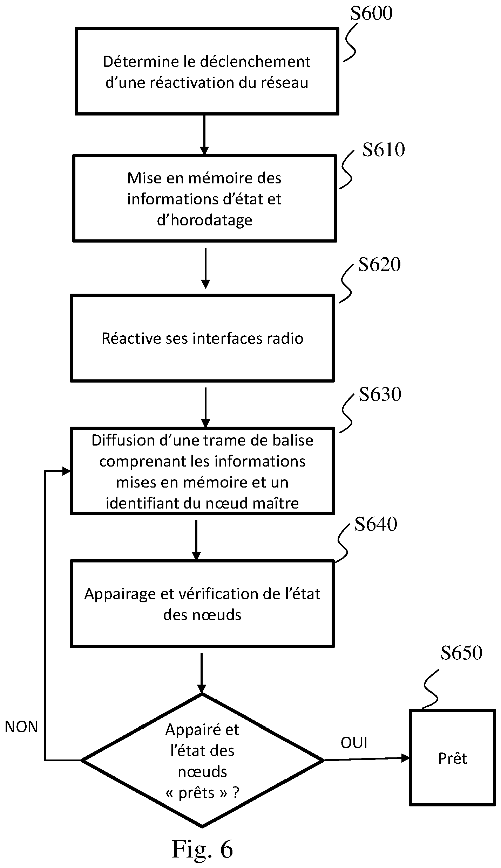

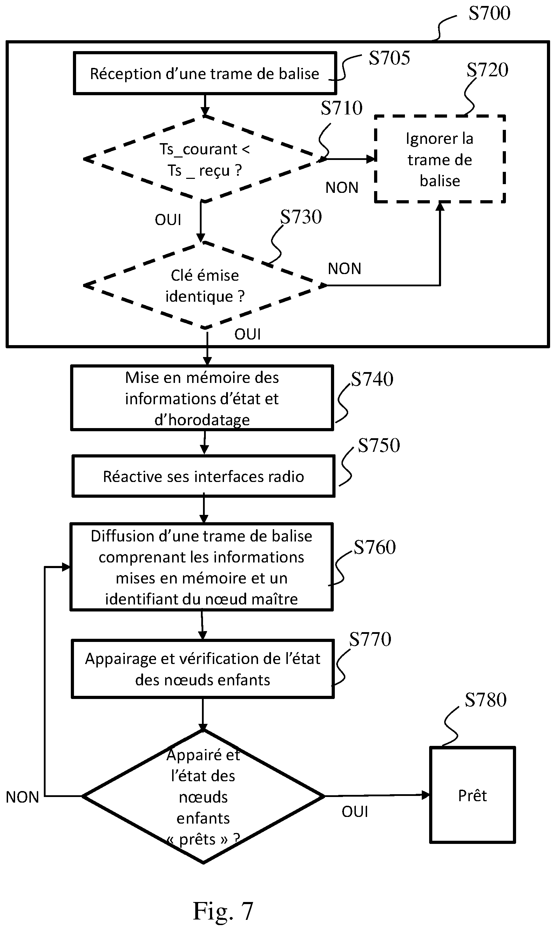

Dans un mode particulier de réalisation (non représenté sur les Figs. 2 et 4), la demande de mise en veille peut être refusée par un noeud receveur pour un autre type de raison que le fait d'être « noeud intermédiaire». Dans une variante, un noeud receveur peut ne pas répondre à une demande de mise en veille car il est non joignable, par exemple parce qu'il est éteint ou perturbé. Dans tous ces cas (i.e. refus pour un autre type de raison que le fait d'être « nœud intermédiaire » ou bien absence de réponse), le noeud demandeur va changer en mémoire l'état du procédé de mise en veille relatif au noeud receveur en « refusé ». En effet, un noeud receveur peut être non joignable. De ce fait, il ne peut pas être informé de la mise en veille du réseau. Dans ce cas particulier, la procédure de mise en veille est annulée. Le noeud demandeur informe les autres noeuds de l'arrêt de la procédure de mise en veille. Le cas échéant, il peut demander aux noeuds déjà mis en veille de se réactiver, e.g. en utilisant le procédé décrit en référence aux Figs. 6 et 7. Les noeuds ayant reçu la demande d'annulation de la mise en veille voient leurs états configurés à « annulé » au niveau du noeud demandeur. Les noeuds qui ne sont pas encore mis en veille reçoivent une demande d'annulation et appliquent la même procédure de façon récursive. La demande d'annulation doit être acquittée. A la réception de l'acquittement, le nœud demandeur change son état et le configure à « prêt ».

Dans un mode particulier de réalisation, des trames de balise (« beacon frame » en anglais) peuvent être diffusées afin d'informer l'ensemble des noeuds du réseau de communication sans fils que ce dernier est en cours de mise en veille. Plus précisément, le noeud à partir duquel la mise en veille a été déclenchée ajoute dans au moins une trame de balise (« beacon frame » en anglais) une information (IE) indiquant que le réseau est en cours de mise en veille. Dans une variante, ce noeud ajoute dans au moins une trame de balise une information (IE) indiquant l'état du procédé de mise en veille, e.g. si celui-ci est en cours, terminé, annulé, etc.

Le procédé selon au moins un mode de réalisation permet avantageusement de mettre en veille au moins une partie du réseau et donc d'économiser de l'énergie et de limiter la diffusion inutile de signaux électromagnétiques. Par ailleurs, cette mise en veille peut être déclenchée depuis n'importe quel noeud du réseau.

Les Figs 6 et 7 illustrent schématiquement un procédé de réactivation d'un réseau de communication sans fil distribué conforme à l'une des normes IEEE 802.11, par exemple le réseau 100, ledit réseau de communication sans fil comprenant une pluralité de noeuds de collecte dont une partie au moins est en veille. La mise en veille des noeuds a pu s'effectuer via le procédé décrit en référence aux Figs 2 et 4 ou par tout autre procédé permettant une mise en veille aboutissant à une désactivation des interfaces radio de collecte « AP-B » et « ST-B » uniquement en émission, ces dernières restant actives en réception. Dans une variante, la désactivation des interfaces radio de collecte « AP-B » et « ST-B » en émission a été suivie d'une désactivation des interfaces radio « AP-F » en émission et en réception. Les informations de connexion (e.g. ou « Basic Service Set IDentifier », SSID et mot de passe), optionnellement la clé d'identification et le canal utilisé avant la mise en veille auront également été sauvegardés en mémoire lors de la procédure de mise en veille. Plus particulièrement, la Fig. 6 illustre le procédé du point de vue d'un nœud, dit maître, à partir duquel le procédé de réactivation du réseau est déclenché et la Fig. 7 illustre le procédé du point de vue d'un autre noeud du réseau.

En référence à la Fig. 6, lors d'une étape S600, un noeud du réseau de communication sans fil détermine qu'une réactivation du réseau de communication sans fil a été déclenchée par un utilisateur. Ce noeud peut être n'importe quel noeud du réseau de communication sans fil. Le déclenchement de la réactivation peut se faire par un utilisateur par appui sur un bouton physique du nœud. Selon une variante, le déclenchement de la réactivation est effectué par un utilisateur via une interface utilisateur rattachée au nœud. Le noeud va alors démarrer le procédé réactivation et devient noeud maître du procédé de réactivation.

Lors d'une étape S610, le nœud maître met en mémoire les informations utiles à la réactivation du réseau. Notamment, il stocke en mémoire : son état interne qu'il configure à « réactivation» et une information d'horodatage (« timestamp » en anglais) pour qu'elle soit égale à la date du déclenchement par l'utilisateur de la réactivation. L'état interne du noeud donne une indication sur la phase dans laquelle il se trouve dans le procédé de réactivation. L'état « réactivation » indique qu'il est en cours de réactivation et l'état « prêt » indique qu'il est réactivé et qu'il peut donc recevoir et transmettre des données via ses interfaces radio de la même manière qu'avant la mise en veille.

Lors d'une étape S620, le noeud maître réactive l'ensemble de ses interfaces radio. Notamment, il réactive ses interfaces radio « AP-F » en émission et en réception et ses interfaces radio de collecte « AP-B » et « ST-B » en émission. Dans une variante de réalisation, le noeud maître réactive uniquement ses interfaces radio de collecte « AP-B » et « ST-B » en émission. Dans cette variante, ses interfaces radio « AP-F » sont réactivées en émission et en réception plus tard, e.g. à l'issue de l'étape S650. Le canal de réactivation est utilisé optionnellement lors de la réactivation du système. Si, lors de la réactivation, le canal de réactivation est en service, il va continuer à être utilisé lors de l'utilisation du réseau. Ce canal peut être différent du canal utilisé préalablement à la mise en veille. Dans une variante de réalisation, le noeud maître configure, lors de S620, le canal utilisé par ses interfaces radio de collecte sur le canal défini avant mise en veille. Lors d'une étape S630, le noeud maître diffuse à l'ensemble des noeuds du réseau un message leur indiquant de se réactiver. En effet, les interfaces radio « AP-B » et « ST-B » des noeuds sont actives en réception pendant la période de mise en veille du réseau. Ainsi, les noeuds à portée du nœud maître restent configurés pour recevoir et lire les messages diffusés par le noeud maître.

A cet effet, le noeud maître ajoute, dans ses trames de balise, une information IE (« Information Element » en anglais) comprenant notamment les informations utiles à la réactivation du réseau mises en mémoire à l'étape S610, i.e. son état interne configuré à « réactivation » et optionnellement une information d'horodatage correspondant à la date du déclenchement par l'utilisateur de la réactivation. L'IE comprend optionnellement un identifiant du noeud maître, e.g. son adresse MAC, et une clé d'identification négociée avant mise en veille du réseau afin d'identifier le noeud maître comme appartenant bien au réseau. La clé d'identification peut également être utilisée comme une clé de hachage afin de crypter ces données pour parer à d'éventuelles attaques.

Lors d'une étape S640, le noeud maître s'appaire au noeud qui était son «parent» avant la mise en veille. Il vérifie que l'ensemble de ses noeuds enfants sont appairés à lui et que l'état de l'ensemble des nœuds du réseau est configuré à « prêt ». Si c'est le cas alors le noeud maître peut à son tour se configurer comme « prêt » lors d'une étape S650. Le noeud « maître » est le dernier noeud passant à l'état « prêt », ce qui indique que le procédé de réactivation est terminé et que le réseau fonctionne de la même manière qu'avant la mise en veille.

Dans une variante, le noeud maître envoie un message sur l'ensemble du réseau qui doit être acquitté en cascade de la même façon que pour la demande de mise en veille afin de vérifier que tous les noeuds sont bien réactivés. Par exemple en référence à la Fig. 5, en supposant que A est le noeud maître, il envoie alors à B un message de vérification, B transmet le message à C et à D. Une fois que C et D ont répondu à B, B répond à A pour confirmer que ses noeuds enfant sont réactivés.

En référence à la Fig. 7, lors d'une étape S700, un noeud du réseau de communication sans fil, dit noeud courant, détermine qu'une réactivation du réseau de communication sans fil a été déclenchée. Pour un nœud courant différent du noeud maître, l'étape S700 (qui correspond à l'étape S600 pour le noeud maître) comprend les étapes S705 à S730.

Lors d'une étape S705, le noeud courant reçoit une trame de balise émise par le noeud maître ou relayée par un autre noeud du réseau.

Lors d'une étape optionnelle S710, le noeud courant compare l'information d'horodatage Ts_reçu reçue dans la trame de balise avec sa propre information d'horodatage Ts_courant pour vérifier s'il s'agit bien d'un nouvel événement. Si Ts_reçu est plus grand que Ts_courant, le noeud courant vérifie l'état indiqué dans l'IE de la trame de balise reçue. Dans le cas contraire, il va considérer que la trame de balise comprend une information obsolète et va ignorer la trame de balise lors d'une étape S720.

Si l'état dans l'IE indique « réactivation », le noeud courant vérifie lors d'une étape optionnelle S730 si la clé d'indentification négociée avant la mise en veille et stockée dans sa mémoire est identique à la clé indiquée dans la trame de balise reçue. Si c'est le cas, il va relayer les informations de réactivation (état, information d'horodatage, identification du noeud maître, optionnellement clé d'identification) aux autres nœuds. A cet effet, lors d'une étape S740, le noeud courant met en mémoire les informations utiles à la réactivation du réseau. Cela est effectué à partir de l'IE de la trame de balise reçue. Notamment, il stocke en mémoire son état interne en le configurant à « réactivation». Optionnellement, il stocke la valeur de Ts_reçu laquelle vient remplacer la valeur Ts_courant, et d'autres données telles que l'identifiant du noeud maître indiqué dans l'IE.

Lors d'une étape S750, le noeud courant réactive l'ensemble de ses interfaces radio. Notamment, il réactive ses interfaces radio « AP-F » en émission et en réception et ses interfaces radio de collecte « AP-B » et « ST-B » en émission. Dans une variante, le noeud courant réactive uniquement ses interfaces radio de collecte « AP-B » et « ST-B » en émission. Dans cette variante, ses interfaces radio « AP-F » sont réactivées en émission et en réception plus tard, e.g. à l'issue de l'étape S780. Le canal de réactivation est utilisé optionnellement lors de la réactivation du système. Si, lors de la réactivation, le canal de réactivation est en service, il va continuer à être utilisé lors de l'utilisation du réseau. Dans une variante, il configure le canal utilisé par ses interfaces radio de collecte sur le canal défini avant mise en veille.

Lors d'une étape S760, le noeud courant diffuse des trames de balise comprenant une information IE (« Information Element » en anglais) avec les informations utiles à la réactivation du réseau mises en mémoire à l'étape S740, i.e. son état interne configuré à « réactivation », l'information d'horodatage correspondant à la date du déclenchement par l'utilisateur de la réactivation et l'identifiant du noeud maître. L'IE comprend optionnellement la clé d'identification négociée avant mise en veille du réseau afin d'identifier le noeud courant comme appartenant bien au réseau. Ainsi, de proche en proche, les informations figurant dans la trame de balise du nœud maître sont relayées par d'autres noeuds du réseau. Dans une variante, le noeud courant ajoute son propre identifiant, e.g. son adresse MAC, dans 1'IE. Ainsi, il est possible de savoir par quels noeuds les informations de réactivation ont transité.

Lors d'une étape S770, ayant connaissance de sa topologie proche, le noeud courant va s'appairer au noeud qui était son « parent » avant la mise en veille. En effet, le nœud, comme tout équipement Wi-Fi, a la connaissance et a donc en mémoire, indépendamment de son état de fonctionnement la liste des stations (nœuds enfants) qui sont associés sur son interface AP-B et le point d'accès (nœud parent) sur lequel est associée son interface ST-B.

Si le nœud courant ne possédait pas de noeuds enfants avant sa mise en veille, après appairage avec son noeud parent, il configure son état interne à « prêt » et met à jour sa propre information d'horodatage pour y indiquer la date de son changement d'état lors d'une étape S780.

Si le noeud courant possédait des noeuds enfants avant sa mise en veille, il attend que l'ensemble de ses noeuds enfants soient appairés à lui. Optionnellement, il vérifie par le biais d'un balayage de son environnement radio que leur état interne est bien configuré à « prêt ». Si c'est le cas alors le noeud courant, après appairage avec son noeud parent, configure à son tour son état interne à « prêt » et met à jour sa propre information d'horodatage pour y indiquer la date de son changement d'état lors de l'étape S780. Ainsi, il indique ainsi que le procédé de réactivation est achevé pour sa branche.

Dans le cas particulier d'une topologie en boucle, les noeuds ayant connaissance de la topologie, changent leur état interne à « prêt » une fois que l'ensemble de leurs noeuds « enfant» se sont appairés et qu'ils se sont eux-mêmes associés à leurs nœuds «parent». L'ensemble des noeuds scannent alors de manière périodique leur environnement radio pour vérifier si chaque trame de balise émise par les noeuds du réseau contient bien l'état « prêt ». Une fois que seul l'état « prêt » est diffusé, le procédé de réactivation est terminé. Cette approche peut également être utilisée dans le cadre d'une topologie en étoile et en branche.

Les procédés de mise en veille et de réactivation du réseau de communication sans fil distribué peuvent être implémentés de manière indépendante. Ainsi, le réseau de communication sans fil mis en veille par le procédé décrit en référence aux étapes Figs 2 à 5 peut être réactivé par le procédé décrit en référence aux Figs 6 et 7 ou bien par un procédé différent. De la même manière, le réseau de communication sans fil réactivé par le procédé décrit en référence aux Figs 6 et 7 peut avoir été mis en veille préalablement par le procédé décrit en référence aux Figs 2 à 5 ou bien par un procédé différent.

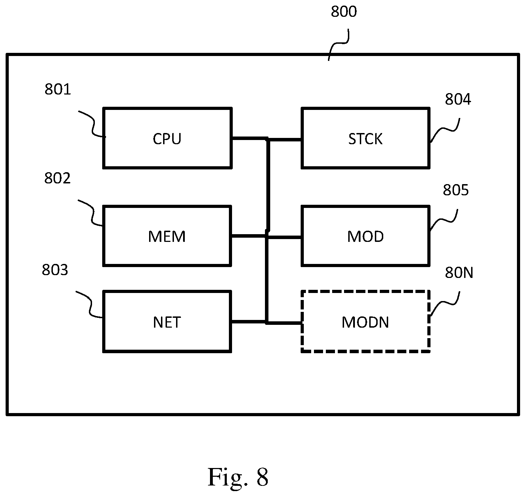

La **Fig. 8** illustre schématiquement l'architecture matérielle d'un dispositif électronique ou noeud de collecte 800 d'un réseau de communication sans fil, le dispositif électronique ou noeud de collecte étant configuré pour exécuter tout ou partie des étapes du procédé illustré dans la Fig. 2, dans la Fig.4, dans la Fig. 6 ou dans la Fig. 7.

Ainsi, le dispositif électronique 800 comprend, reliés par un bus de communication : un processeur ou CPU (« *Central Processing Unit »* en anglais) 801 ; une mémoire MEM 802 de type RAM (« *Random Access Memory* » en anglais), ROM (« *Read Only Memory* » en anglais) et/ou EPROM (« *Erasable Programmable Read Only Memory* » en anglais), possiblement un module réseau NET 803, par exemple de type Ethernet, un module de stockage STCK 804 de type stockage interne et possiblement une pluralité de modules radiofréquence 805 à 80N conformes à une norme de type IEEE 802.11. Le noeud de collecte 800 peut optionnellement comprendre une ou plusieurs interfaces d'entrée/sortie non représentées sur la Fig. 8 (e.g. un clavier, une souris, un pavé tactile (« touchpad » en anglais, une webcam, etc.), chacune étant configurée pour afficher des informations et/ou permettre à un utilisateur de rentrer des commandes ou des données. Le noeud de collecte 800 peut également comprendre une source d'énergie non représentée sur la Fig. 8 qui peut également être externe au noeud de collecte.

Le module de stockage STCK 804 peut être de type disque dur HDD (« *Hard Disk Drive* » en anglais) ou SSD (« *Solid-State Drive* » en anglais), ou de type lecteur de support de stockage externe, tel un lecteur de cartes SD (« *Secure Digital* » en anglais).

Le processeur CPU 801 peut enregistrer des données, ou informations, dans la mémoire MEM 802 ou dans le module de stockage STCK 804. Le processeur CPU 801 peut lire des données enregistrées dans la mémoire MEM 802 ou dans le module de stockage STCK 804. Ces données peuvent correspondre à des paramètres de configuration. Le module réseau NET 503, si présent, permet typiquement la connexion du dispositif électronique 800 à un réseau local et/ou Internet. Chaque module radiofréquence 805 à 80N permet au dispositif électronique 800 d'établir une pluralité d'interfaces radiofréquence conforme à une norme dite Wi-Fi. Une interface radiofréquence peut être un point d'accès Wi-Fi, ou au contraire une interface radiofréquence dite utilisateur permettant une association à une interface radiofréquence dite point d'accès d'un autre dispositif électronique.

Le processeur CPU 801 est capable d'exécuter des instructions chargées dans la mémoire MEM 802, par exemple à partir du module de stockage STCK 804. Lorsque le dispositif électronique 800 est mis sous tension, le processeur CPU 801 est capable de lire de la mémoire MEM 802 des instructions et de les exécuter. Ces instructions forment un programme d'ordinateur causant la mise en œuvre, par le processeur CPU 801, de tout ou partie des procédés et étapes décrits ci-avant, particulièrement le procédé décrit dans les Figs 2 et 4 ou le procédé décrit dans les Figs 6 et 7. Ainsi, tout ou partie des procédés et étapes décrits ci-avant peut être implémenté sous forme logicielle par exécution d'un ensemble d'instructions par une machine programmable, telle qu'un DSP (« *Digital Signal Processor »* en anglais) ou un microcontrôleur. Tout ou partie des procédés et étapes décrits ici peut aussi être implémenté sous forme matérielle par une machine ou un composant dédié, tel qu'un FPGA (« *Field-Programmable Gate Array »* en anglais) ou un ASIC (« *Application-Specific Integrated Circuit »* en anglais). Les fonctions du dispositif électronique 800 peuvent être intégrées dans un noeud d'un réseau sans fil conforme à une norme 802.11 IEEE par une mise à jour d'un logiciel, c'est-à-dire par exemple par mise à jour du microprogramme (« *firmware* » en anglais) du dispositif électronique 800.

## Revendications

1. Un procédé de réactivation d'une partie d'un réseau de communication sans fil conforme à l'une des normes IEEE 802.11 comprenant une pluralité de noeuds de collecte organisés selon une hiérarchie parent/enfant, au moins un noeud de collecte dudit réseau de communication, dit nœud courant, comprenant une interface (AP-B) radiofréquence point d'accès et une interface (ST-B) radiofréquence utilisateur d'un réseau sans fil dit réseau de collecte associé au réseau de communication, lesdites interfaces radiofréquence point d'accès et utilisateur dudit réseau de collecte étant désactivées en émission, le procédé étant exécuté par ledit noeud courant, et étant **caractérisé en ce qu'**il comprend :
- recevoir (S705) une première trame de balise émise par un autre nœud dudit réseau de communication, ladite première trame de balise comprenant une information d'état indiquant une réactivation en cours ;
a) mettre en mémoire (S740) un état interne dudit noeud courant pour indiquer que ledit noeud est en cours de réactivation ;
b) réactiver (S620, S750) pour ledit noeud courant l'ensemble de ses interfaces radiofréquence point d'accès et utilisateur du réseau de collecte;
c) diffuser (S630, S760) une seconde trame de balise comprenant une information d'état indiquant une réactivation en cours de sorte à relayer l'information d'état indiquant qu'une réactivation est en cours; et
d) s'appairer (S640, S770) à un noeud parent et dans le cas où ledit noeud courant possède des noeuds enfant, attendre que lesdits noeuds enfant s'appairent à lui, vérifier que l'état interne de chacun desdits noeuds enfants indique que ledit noeud enfant est réactivé et dans le cas où lesdits nœuds enfants sont réactivés mettre à jour l'état interne dudit noeud courant pour indiquer que ledit noeud courant est réactivé , et dans le cas où ledit noeud courant ne possède pas de noeud enfant, mettre à jour l'état interne dudit noeud courant pour indiquer que ledit noeud courant est réactivé

2. Le procédé selon la revendication 1, dans lequel, ledit noeud courant comprenant en outre une interface (AP-F) radiofréquence point d'accès d'un réseau sans fil dit réseau utilisateur associé au réseau de communication laquelle est désactivée en émission et en réception, l'étape b) comprend en outre une étape de réactivation de ladite interface radiofréquence point d'accès dudit réseau utilisateur en émission et en réception.

3. Le procédé selon la revendication 1 ou 2, dans lequel ladite première trame de balise comprend en outre une information d'horodatage correspondant à la date à laquelle ladite réactivation a été déclenchée, lesdites étapes a) à d) étant effectuées uniquement dans le cas où une valeur de ladite information d'horodatage reçue est supérieure à une valeur d'une information d'horodatage courante associée audit noeud courant.

4. Le procédé selon la revendication 3, dans lequel l'étape a) comprend en outre la mise en mémoire de l'information d'horodatage reçue à la place de l'information d'horodatage courante.

5. Le procédé selon la revendication 3 ou 4, dans lequel ladite seconde trame de balise comprend en outre l'information d'horodatage reçue.

6. Le procédé selon l'une des revendications 1 à 5, dans lequel ladite première trame de balise comprenant en outre une clé d'identification dudit réseau, lesdites étapes a) à d) sont effectuées uniquement dans le cas où ladite clé d'identification dudit réseau de ladite trame de balise est identique à une clé d'identification stockée en mémoire dudit noeud courant.

7. Le procédé l'une des revendications 1 à 6, dans lequel ladite réactivation a été déclenchée par un appui sur un bouton d'un nœud dudit réseau de communication sans fil.

8. Le procédé selon l'une des revendications 1 à 7, dans lequel le procédé comprend pour un noeud dudit réseau dit noeud receveur:
1) recevoir un message d'un noeud du réseau, dit noeud demandeur, comprenant une demande de mise en veille ; et
si ledit noeud receveur est un noeud n'ayant pas d'autre noeud adjacent que ledit noeud demandeur, un noeud étant adjacent à un autre nœud s'il est accessible depuis cet autre noeud en un seul saut :
2) Envoyer un message audit noeud demandeur indiquant qu'il accepte la demande de mise en veille ;
3) Recevoir un message comprenant un ordre de mise en veille ;
4) Envoyer un message audit noeud demandeur acquittant l'ordre de mise en veille ;
5) Se mettre en veille en stockant en mémoire des informations de connexion et en désactivant en émission ses interfaces radiofréquence point d'accès et/ou utilisateur dudit réseau de collecte;
sinon:
- Envoyer un message audit noeud demandeur indiquant qu'il refuse la demande de mise en veille et une indication qu'il est noeud intermédiaire ;
- Répéter les étapes 1) à 5) de manière récursive pour chacun des noeuds adjacents dudit noeud receveur distincts dudit nœud demandeur avec ledit noeud receveur agissant comme nouveau noeud demandeur, jusqu'à ce que l'ensemble des noeuds adjacents dudit noeud receveur soit mis en veille ;
- Envoyer un message audit noeud demandeur comprenant une demande d'autorisation de mise en veille ;
- Recevoir un message comprenant un ordre de mise en veille ;
- Envoyer un message audit noeud demandeur en acquittant l'ordre de mise en veille ; et
- Se mettre en veille en stockant en mémoire des informations de connexion et en désactivant en émission ses interfaces radiofréquence point d'accès et/ou utilisateur dudit réseau de collecte.

9. Le procédé selon la revendication 8, dans lequel se mettre en veille comprend en outre désactiver son interface radiofréquence point d'accès du réseau utilisateur en émission et en réception.

10. Le procédé selon la revendication 8 ou 9, dans lequel le message comprenant la demande de mise en veille comprend une information indiquant qu'il s'agit d'une demande de mise en veille et un identifiant du noeud demandeur.

11. Le procédé selon la revendication 10, dans lequel le message comprenant la demande de mise en veille comprend en outre une clé d'identification propre audit réseau.

12. Le procédé selon l'une des revendications 8 à 11, dans lequel le message comprenant l'ordre de mise en veille comprend une information indiquant qu'il s'agit d'un ordre de mise en veille et un identifiant du noeud envoyant le message.

13. Le procédé selon la revendication 12, dans lequel le message comprenant l'ordre de mise en veille comprend en outre une valeur temporelle définissant un instant auquel ledit noeud receveur doit se mettre en veille.

14. Le procédé selon la revendication 12 ou 13, dans lequel le message comprenant l'ordre de mise en veille comprend en outre la clé d'identification propre audit réseau de ladite demande de mise en veille.

15. Le procédé selon l'une des revendications 12 à 14, dans lequel le message comprenant l'ordre de mise en veille comprend en outre un identifiant d'un canal sur lequel les interfaces radio dudit noeud receveur doivent se réactiver.

16. Le procédé selon l'une des revendications 8 à 15, dans lequel le message comprenant la demande d'autorisation de mise en veille comprend une information indiquant qu'il s'agit d'une demande d'autorisation de mise en veille et un identifiant du noeud envoyant ledit message.

17. Un noeud de collecte d'un réseau de communication sans fil conforme à l'une des normes IEEE 802.11, ledit réseau comprenant une pluralité de noeuds de collecte organisés selon une hiérarchie parent/enfant, ledit noeud de collecte comprenant une interface radiofréquence point d'accès et/ou utilisateur d'un réseau sans fil dit de collecte associé au réseau de communication lesquelles sont désactivées en émission, ledit nœud de collecte étant **caractérisé en ce qu'**il est adapté pour exécuter les étapes du procédé selon l'une quelconque des revendications 1 à 16.

18. Un programme d'ordinateur, lequel comprend des instructions pour mettre en œuvre, par un processeur d'un noeud de collecte d'un réseau de communication sans fil distribué comprenant une pluralité de noeuds de collecte, un procédé selon l'une quelconque des revendications 1 à 16, lorsque le programme d'ordinateur est exécuté par le processeur.

19. Un support d'enregistrement, lisible par un noeud de collecte d'un réseau de communication sans fil distribué, sur lequel est stocké le programme d'ordinateur selon la revendication précédente.

## Patentansprüche

1. Verfahren zur Reaktivierung eines Teils eines drahtlosen Kommunikationsnetzes gemäß einer der Normen IEEE 802.11, das eine Vielzahl von Sammelknoten enthält, die gemäß einer Eltern/Kind-Hierarchie organisiert sind, wobei mindestens ein Sammelknoten des Kommunikationsnetzes, aktueller Knoten genannt, eine Zugangspunkt-Radiofrequenzschnittstelle (AP-B) und eine Benutzer-Radiofrequenzschnittstelle (ST-B) eines drahtlosen Netzes, Sammelnetz genannt, enthält, das dem Kommunikationsnetz zugeordnet ist, wobei die Zugangspunkt- und Benutzer-Radiofrequenzschnittstellen des Sammelnetzes sendeseitig deaktiviert sind, wobei das Verfahren vom aktuellen Knoten ausgeführt wird und **dadurch gekennzeichnet ist, dass** es enthält:
- Empfang (S705) eines von einem anderen Knoten des Kommunikationsnetzes gesendeten ersten Beacon-Rahmens, wobei der erste Beacon-Rahmen eine eine laufende Reaktivierung anzeigende Zustandsinformation enthält;
a) Speichern (S740) eines inneren Zustands des aktuellen Knotens, um anzuzeigen, dass der Knoten gerade reaktiviert wird;
b) Reaktivieren (S620, S750) für den aktuellen Knoten der Einheit seiner Zugangspunkt- und Benutzer-Radiofrequenzschnittstellen des Sammelnetzes;
c) Ausstrahlen (S630, S760) eines zweiten Beacon-Rahmens, der eine Zustandsinformation enthält, die eine laufende Reaktivierung anzeigt, um die Zustandsinformation weiterzuleiten, die anzeigt, dass gerade eine Reaktivierung abläuft; und
d) paarweises Verbinden (S640, S770) mit einem Eltern-Knoten in dem Fall, in dem der aktuelle Knoten Kind-Knoten besitzt, Abwarten, dass die Kind-Knoten sich paarweise mit ihm verbinden, Überprüfen, dass der innere Zustand jedes der Kind-Knoten anzeigt, dass der Kind-Knoten reaktiviert ist, und in dem Fall, in dem die Kind-Knoten reaktiviert sind, Aktualisieren des inneren Zustands des aktuellen Knotens, um anzuzeigen, dass der aktuelle Knoten reaktiviert ist, und in dem Fall, in dem der aktuelle Knoten keinen Kind-Knoten besitzt, Aktualisieren des inneren Zustands des aktuellen Knotens, um anzuzeigen, dass der aktuelle Knoten reaktiviert ist.

2. Verfahren nach Anspruch 1, wobei, da der aktuelle Knoten außerdem eine Zugangspunkt-Radiofrequenzschnittstelle (AP-F) eines dem Kommunikationsnetz zugeordneten, Benutzernetz genannten drahtlosen Netzes enthält, die sendeseitig und empfangsseitig deaktiviert ist, der Schritt b) außerdem einen Schritt der sendeseitigen und empfangsseitigen Reaktivierung der Zugangspunkt-Radiofrequenzschnittstelle des Benutzernetzes enthält.

3. Verfahren nach Anspruch 1 oder 2, wobei der erste Beacon-Rahmen außerdem eine Zeitstempelinformation enthält, die dem Datum entspricht, an dem die Reaktivierung ausgelöst wurde, wobei die Schritte a) bis d) nur in dem Fall ausgeführt werden, in dem ein Wert der empfangenen Zeitstempelinformation höher ist als ein Wert einer dem aktuellen Knoten zugeordneten aktuellen Zeitstempelinformation.

4. Verfahren nach Anspruch 3, wobei der Schritt a) außerdem das Speichern der empfangenen Zeitstempelinformation anstelle der aktuellen Zeitstempelinformation enthält.

5. Verfahren nach Anspruch 3 oder 4, wobei der zweite Beacon-Rahmen außerdem die empfangene Zeitstempelinformation enthält.

6. Verfahren nach einem der Ansprüche 1 bis 5, wobei, da der erste Beacon-Rahmen außerdem einen Identifizierungsschlüssel des Netzes enthält, die Schritte a) bis d) nur in dem Fall ausgeführt werden, in dem der Identifizierungsschlüssel des Netzes des Beacon-Rahmens gleich einem im Speicher des aktuellen Knotens gespeicherten Identifizierungsschlüssel ist.

7. Verfahren nach einem der Ansprüche 1 bis 6, wobei die Reaktivierung durch Drücken auf eine Taste eines Knotens des drahtlosen Kommunikationsnetzes ausgelöst wurde.

8. Verfahren nach einem der Ansprüche 1 bis 7, wobei das Verfahren für einen Empfängerknoten genannten Knoten des Netzes enthält:
1) Empfang einer Nachricht von einem anfordernder Knoten genannten Knoten des Netzes, die eine Anforderung des Standby-Betriebs enthält; und
wenn der Empfangsknoten ein Knoten ist, der keinen anderen benachbarten Knoten als den anfordernden Knoten hat, wobei ein Knoten einem anderen Knoten benachbart ist,
wenn er von diesem anderen Knoten in einem einzigen Hop zugänglich ist:
2) Senden einer Nachricht an den anfordernden Knoten, die anzeigt, dass er die Anforderung des Standby-Betriebs akzeptiert;
3) Empfang einer Nachricht, die einen Standby-Befehl enthält;
4) Senden einer Nachricht an den anfordernden Knoten, die den Standby-Befehl bestätigt;
5) in den Standby-Betrieb gehen, indem Verbindungsinformationen gespeichert werden und indem sendeseitig seine Zugangspunkt- und/oder Benutzer-Radiofrequenzschnittstellen des Sammelnetzes deaktiviert werden;
sonst:
- Senden einer Nachricht an den anfordernden Knoten, die anzeigt, dass er die Anforderung des Standby-Betriebs zurückweist, und einer Angabe, dass er Zwischenknoten ist;
- rekursives Wiederholen der Schritte 1) bis 5) für jeden der dem Empfangsknoten benachbarten Knoten, die sich vom anfordernden Knoten unterscheiden, wobei der Empfangsknoten als neuer anfordernder Knoten agiert, bis die Gesamtheit der dem Empfangsknoten benachbarten Knoten im Standby ist;
- Senden einer Nachricht an den anfordernden Knoten, die eine Anforderung der Autorisierung des Standby-Betriebs enthält;
- Empfang einer Nachricht, die einen Standby-Befehl enthält;
- Senden einer Nachricht an den anfordernden Knoten unter Bestätigung des Standby-Befehls; und
- in den Standby-Betrieb gehen, indem Verbindungsinformationen gespeichert werden und indem sendeseitig seine Zugangspunkt- und/oder Benutzer-Radiofrequenzschnittstellen des Sammelnetzes deaktiviert werden.

9. Verfahren nach Anspruch 8, wobei der Standby-Betrieb außerdem enthält, seine Zugangspunkt-Radiofrequenzschnittstelle des Benutzernetzes sendeseitig und empfangsseitig zu deaktivieren.

10. Verfahren nach Anspruch 8 oder 9, wobei die die Anforderung des Standby-Betriebs enthaltende Nachricht eine Information, die anzeigt, dass es sich um eine Anforderung des Standby-Betriebs handelt, und eine Kennung des anfordernden Knotens enthält.

11. Verfahren nach Anspruch 10, wobei die die Anforderung des Standby-Betriebs enthaltende Nachricht außerdem einen dem Netz eigenen Identifizierungsschlüssel enthält.

12. Verfahren nach einem der Ansprüche 8 bis 11, wobei die den Standby-Befehl enthaltende Nachricht eine Information, die anzeigt, dass es sich um einen Standby-Befehl handelt, und eine Kennung des die Nachricht sendenden Knotens enthält.

13. Verfahren nach Anspruch 12, wobei die den Standby-Befehl enthaltende Nachricht außerdem einen Zeitwert enthält, der einen Augenblick definiert, in dem der Empfangsknoten in den Standby-Betrieb übergehen muss.

14. Verfahren nach Anspruch 12 oder 13, wobei die den Standby-Befehl enthaltende Nachricht außerdem den dem Netz eigenen Identifizierungsschlüssel der Anforderung des Standby-Betriebs enthält.

15. Verfahren nach einem der Ansprüche 12 bis 14, wobei die den Standby-Befehl enthaltende Nachricht außerdem eine Kennung eines Kanals enthält, auf dem die Radiofrequenzschnittstellen des Empfängerknotens sich reaktivieren müssen.

16. Verfahren nach einem der Ansprüche 8 bis 15, wobei die die Autorisierungsanforderung des Standby-Betriebs enthaltende Nachricht eine Information, die anzeigt, dass es sich um eine Autorisierungsanforderung des Standby-Betriebs handelt, und eine Kennung des die Nachricht sendenden Knotens enthält.

17. Sammelknoten eines drahtlosen Kommunikationsnetzes gemäß einer der Normen IEEE 802.11, wobei das Netz eine Vielzahl von Sammelknoten enthält, die gemäß einer Eltern/Kind-Hierarchie organisiert sind, wobei der Sammelknoten eine Zugangspunkt- und/oder eine Benutzer-Radiofrequenzschnittstelle eines drahtlosen sogenannten Sammelnetzes enthält, das dem Kommunikationsnetz zugeordnet sind, die sendeseitig deaktiviert sind, wobei der Sammelknoten **dadurch gekennzeichnet ist, dass** er geeignet ist, die Schritte des Verfahrens nach einem der Ansprüche 1 bis 16 auszuführen.

18. Computerprogramm, das Anweisungen enthält, um durch einen Prozessor eines Sammelknotens eines verteilten drahtlosen Kommunikationsnetzes, das eine Vielzahl von Sammelknoten enthält, ein Verfahren nach einem der Ansprüche 1 bis 16 durchzuführen, wenn das Computerprogramm vom Prozessor ausgeführt wird.

19. Speicherträger, lesbar für einen Sammelknoten eines verteilten drahtlosen Kommunikationsnetzes, auf dem das Computerprogramm nach dem vorhergehenden Anspruch gespeichert ist.

## Claims

1. A method for reactivating a part of a wireless communication network in accordance with one of the IEEE 802.11 standards comprising a plurality of gathering nodes organised in a parent/child hierarchy, at least one gathering node in said communication network, referred to as the current node, comprising an access-point radio-frequency interface (AP-B) and a user radio-frequency interface (ST-B) of a so-called gathering wireless network associated with the communication network, said access-point and user radio-frequency interfaces of said gathering network being deactivated in sending mode, the method being executed by said current node and being **characterised in that** it comprises;
- receiving (S705) a first beacon frame sent by another node in said communication network, said first beacon node comprising state information indicating a reactivation in progress; and
a) putting in memory (S704) an internal state of said current node to indicate that said node is being reactivated;
b) reactivating (S620, S750), for said current node, all of its access-point and user radio-frequency interfaces of the gathering network;
c) broadcasting (S630, S760) a second beacon frame comprising state information indicating a reactivation in progress so as to relay the state information indicating that a reactivation is in progress; and
d) pairing (S640, S770) with a parent node and, in the case where said current node has child nodes, waiting until said child nodes pair with it, checking that the internal state of each of said child nodes indicates that said child node is reactivated and, in the case where said child nodes are reactivated, updating the internal state of said current node to indicate that said current node is reactivated, and, in the case where said current node does not have a child node, updating the internal state of said current node to indicate that said current node is reactivated..

2. The method according to claim 1, wherein, said current node further comprising an access-point radio-frequency interface (AP-F) of a wireless network known as a user network associated with the communication network that is deactivated in sending mode and in reception mode, step b) further comprises a step of reactivating said access-point radio-frequency interface of said user network in sending mode and in reception mode.

3. The method according to claim 1 or 2, wherein said first beacon frame further comprises timestamp information corresponding to the time at which said reactivation was triggered, said steps a) to d) being performed solely in the case where a value of said timestamp information received is higher than a value of current timestamp information associated with said current node.

4. The method according to claim 3, wherein the step a) further comprises the putting in memory of the timestamp information received in place of the value of the current timestamp information.

5. The method according to claim 3 or 4, wherein said second beacon frame further comprises the timestamp information received.

6. The method according to one of claims 1 to 5, wherein, said first beacon frame further comprising a key identifying said network, said steps a) to d) are performed solely in the case where said key identifying said network of said beacon frame is identical to an identification key stored in memory of said current node.

7. The method according to one of claims 1 to 6, wherein said reactivation is triggered by pressing on a button of a node of said wireless communication network..

8. The method according to one of claims 1 to 7, wherein the method comprises, for a node of said network referred to as a receiving node:
1) receiving a message from a node in the network, referred to as a requesting node, comprising a standby request; and
if said receiving node is a node not having any adjacent node other than said requesting node, a node being adjacent to another node if it is accessible from this other node in a single hop:
2) sending a message to said requesting node indicating that it accepts the standby request;
3) receiving a message comprising a standby instruction;
4) sending a message to said requesting node acknowledging the standby instruction;
5) going on standby while storing in memory connection information and deactivating in sending mode its access-point and/or user radio-frequency interfaces of said gathering network;
otherwise:
- sending a message to said requesting node indicating that it refuses the standby request and an indication that it is an intermediate node;
- repeating the steps 1) to 5) recursively for each of the nodes adjacent to said receiving node distinct from said requesting node with said receiving node acting as a new requesting node, until all the nodes adjacent to said receiving node are put on standby;
- sending a message to said requesting node comprising a request for enabling standby;
- receiving a message comprising a standby instruction;
- sending a message to said requesting node acknowledging the standby instruction; and
- going on standby while storing in memory connection information and deactivating in sending mode its access-point and/or user radio-frequency interfaces of said gathering network.

9. The method according to claim 8, wherein going on standby further comprises deactivating its access-point radio-frequency interface of the user network in sending mode and in reception mode.

10. The method according to claim 8 or 9, wherein the message comprising the standby request comprises information indicating that it is a standby request and an identifier of the requesting node.

11. The method according to claim 10, wherein the message comprising the standby request further comprises an identification key particular to said network.

12. The method according to one of claims 8 to 11, wherein the message comprising the standby instruction comprises information indicating that it is a standby instruction and an identifier of the node sending the message.

13. The method according to claim 12, wherein the message comprising the standby instruction further comprises a time value defining an instant at which said receiving node must go on standby.

14. The method according to claim 12 or 13, wherein the message comprising the standby instruction further comprises the identification key particular to said network of said standby request.

15. The method according to one of claims 12 to 14, wherein the message comprising the standby instruction further comprises an identifier of a channel on which the radio interfaces of said receiving node must reactivate.

16. The method according to one of claims 8 to 15, wherein the message comprising the standby-enabling request comprises information indicating that it is a standby-enabling request and an identifier of said node sending said message.

17. A gathering node of a wireless communication network in accordance with one of the IEEE 802.11 standards, said network comprising a plurality of gathering nodes organised in a parent/child hierarchy, said gathering node comprising an access-point and/or user radio-frequency interface of a so-called gathering wireless network associated with the communication network which are deactivated in sending mode, said gathering node being **characterised in that** it is adapted for performing the steps of the method according to any one of claims 1 to 16.

18. A computer program, which comprises instructions for implementing, by a processor of a gathering node of a distributed wireless communication network comprising a plurality of gathering nodes, a method according to any one of claims 1 to 16, when the computer program is executed by the processor.

19. A recording medium, which can be read by a gathering node of a distributed wireless communication network, on which the computer program according to the preceding claim is stored.
